# EUROPEAN PATENT APPLICATION

(11) **EP 1 604 759 A1**
(43) Date of publication of application: **14.12.2005**
(21) Application number: 04719129.1
(22) Date of filing: 10.03.2004
(51) Int. Cl.: B22F 1/00, B22F 9/28

(54) **NICKEL BASED ULTRAFINE POWDER**

(30) Priority: 12.03.2003 JP 2003066263; 26.02.2004 JP 2004051818
(71) Applicant: JFE Mineral Company, Ltd., Tokyo 100-0005 (JP)
(72) Inventor: YAMANE, Hiroshi, JFE MINERAL CO. LTD., Chiba 2600826 (JP); YOSHIOKA, Keiichi, JFE MINERAL CO., LTD., Chiba 2600826 (JP)
(74) Representative: HOFFMANN EITLE
(86) International application number: PCT/JP2004/003121
(87) International publication number: WO 2004/080629

(57) **Abstract**

In order to reduce the size of a laminated ceramic capacitor by reducing the thickness of a dielectric material, to increase the number of laminated dielectric layers and electrodes, and to elevate the capacity, the quantity of coarse particles of which particle diameters exceed 1 µm is reduced from the metal powder used in the internal electrodes. There is provided a nickel-based ultra-fine powder, wherein the average particle diameter of primary particles is 0.05 to 0.3 µm, the number of the primary particles that have a particle diameter of 1 µm or larger is 50 ppm or less relative to the total number of the particles, and the number of the primary particles that have a particle diameter of 0.6 times or smaller than the average particle diameter is 10% or less relative to the total number of the particles. The nickel-based ultra-fine powder is produced from nickel chloride vapor or the like using a vapor-phase hydrogen reduction method.

## Description

### Technical Field

The present invention relates to a nickel-based ultra-fine powder used mainly in the internal electrode of a multilayer ceramic capacitor.

In the present invention, the nickel-based ultra-fine powder means a nickel ultra-fine powder and a nickel alloy ultra-fine powder. The nickel ultra-fine powder means an ultra-fine powder of pure nickel or nickel that contains unavoidable impurities; and a nickel alloy means an alloy that contains nickel as the major component to which an alloy component is added, and for example, a nickel alloy that contains a small quantity of Mn, Si and the like, or an alloy of nickel and a metal easily alloyed with nickel, such as Zr, W, Cu, Cr, Fe or Al. As the nickel alloy for the internal electrode of a multilayer ceramic capacitor, the alloy that contains 95% or more by mass of nickel is preferred.

### Background Art

For nickel ultra-fine powder used in the internal electrode of a multilayer ceramic capacitor, with the reduction of the thickness of internal electrodes and dielectric layers, it is important to reduce the quantity of coarse particles in order to avoid the defect due to the short-circuiting between electrodes.

There has been a technique to reduce the average particle diameter of nickel ultra-fine powder to 0.2 to 0.6 µm, and to reduce the existence probability of course particles that have particle diameters of 2.5 times or larger than the average particle diameter in term of number to 0.1% (1000 ppm) or less (see for example, Patent Document 1).

There has also been a technique to reduce the average particle diameter of nickel ultra-fine powder to 0.1 to 1.0 µm, and to reduce the existence probability of course particles that have particle diameters of 2 µm or larger in term of number to 700/one million (700 ppm) or less (see for example, Patent Document 2).

Furthermore, there has been disclosed a nickel powder wherein the average diameter of primary particles is 0.1 to 2 µm, the number of particles that have particle diameters of 1.5 times or larger than the average particle diameter in the laser diffraction scattering particle size distribution measurement is 20% or less of the total particle number, and the number of particles that have particle diameters of 0.5 times or smaller than the average particle diameter is 5% or less of the total particle number (see for example, Patent Document 3).

[Patent Document 1] Japanese Patent Laid-Open No. 11-189801

[Patent Document 2] Japanese Patent Laid-Open No. 2001-73007

[Patent Document 3] Japanese Patent Laid-Open No. 2001-247903

### Disclosure of the Invention

Heretofore, the thickness of an internal electrode and the thickness of a dielectric material in a multilayer ceramic capacitor was 1 µm or more, for example, the thickness of an internal electrode was 1.5 µm, and the thickness of a dielectric material was 3 µm. Therefore, conventional nickel ultra-fine powder used as the internal electrode of a multilayer ceramic capacitor had a large average particle diameter and a wide particle size distribution, the particle diameters of coarse particles that were allowed to be mixed incidentally were also large, and the incidental mixing probability of the coarse particles was also higher than that in the current situation. In recent years, however, the internal electrode and the dielectric material tend to be thinned to 1 µm or thinner to reduce the size of the multilayer ceramic capacitor; and the layers of laminated dielectric materials and internal electrodes tend to be increased in number to elevate the capacity of the capacitor.

Therefore, the average particle diameter of the primary particles of the metal powder used in the internal electrode must be smaller than 1 µm, and it is essential that the quantity of the coarse particles of particle diameter that exceeds 1 µm is limited to a certain level and reduce the percentage of short-circuiting caused by metal particles that thrust through the dielectric material between electrodes. If the quantity of fine particles that have particle diameters of 0.6 times or smaller than the average particle diameter is large, since these particles cause oxidizing expansion or low-temperature sintering easier than particles of the average particle diameter, there is possibility of causing the dielectric material to crack during the process for firing the multilayer ceramic capacitor.

An object of the present invention is to provide a nickel-based ultra-fine powder wherein the above-described problems are solved.

In order to solve the above-described problems, the present invention provides a nickel-based ultra-fine powder, wherein the average particle diameter of primary particles is 0.05 to 0.3 µm, the number of the primary particles that have a particle diameter of 1 µm or larger is 50 ppm or less relative to the total number of the particles, and the number of the primary particles that have a particle diameter of 0.6 times or smaller than the average particle diameter is 10% or less relative to the total number of the particles.

According to the present invention, there is exerted an effect that the rejection rate in manufacturing small or high-capacity laminated ceramic capacitors with the thickness of the dielectric material and the internal electrode being 1 µm or less is extremely lowered.

### Best Mode for Carrying Out the Invention

In the present invention, a primary particle means a particle wherein the contour of a single particle can be distinguished when a powder in the state of dry particles is observed through a scanning electron microscope(SEM). When the powder is not dispersed in a solvent, the primary particles are often present in an aggregated form. When dispersed under adequate conditions in a liquid such as an organic solvent, aggregation is loosened, and primary particles can be present separately.

In order to confirm that the number of primary particles that have a particle diameter of 1 µm or larger is 50 ppm of the total number of particles or less, the total number of primary particles observed through a SEM must be 200,000 or more. In order to confirm that the number of primary particles that have a particle diameter of 0.6 times or smaller than the average particle diameter is 10% or less of the total number of particles, the total number of primary particles observed through a SEM must be 4,000 or more.

In the present invention, the reason why the average particle diameter of a primary particle is 0.3 µm or smaller is that if it exceeds 0.3 µm, the short-circuiting rate of internal electrodes is significantly increased. If the number of particles that can be lined in the direction of the thickness of the internal electrode is large, it is considered that a continuous electrode is formed after firing.

It is extremely difficult to obtain powder whose average particle diameter is 0.3 µm or smaller and whose number of particles that have particle diameters of 1 µm or larger is 50 ppm or less of the total number of particles by classifying powder that has a particle size distribution wherein the average particle diameter of a primary particle exceeds 0.3 µm.

The reason why the average particle diameter of a primary particle is 0.05 µm or larger is that, when a nickel powder paste is prepared and an electrode is formed by printing, the nickel powder can be sufficiently dispersed in the paste. If the particle diameter is excessively small causing firm aggregation, when the nickel powder is dispersed in a solvent to prepare the paste, it becomes difficult to loosen aggregation and disperse the powder.

The reason why the number of particles wherein the particle diameter of primary particles is 1 µm or larger is 50 ppm or less of the total number of particles is to restrict the rate of short-circuiting of the electrodes caused by coarse particles to a practically acceptable level, the coarse particle having particle diameters of larger than 1 µm which thrust through the dielectric material between electrodes.

The reason why the number of primary particles that have particle diameters of 0.6 times or smaller than the average particle diameter is decided to be 10% or less of the total number of particles is as follows: Fine particles are oxidized and expand easier than relatively large particles of particle diameters near the average particle diameter, and start sintering from a relatively low temperature. Therefore, if the number of fine particles of particle diameters of 0.6 times or smaller than the average particle diameter exceeds 10%, strain is generated in the dielectric material during sintering in the firing process for manufacturing a multilayer ceramic capacitor causing cracking. The reason is to prevent this.

It is preferable that the nickel-based ultra-fine powder is manufactured from a nickel chloride vapor using a vapor phase hydrogen reduction method, because the particle size is even, and the particle shape is nearly spherical. The thus manufactured nickel-based ultra-fine powder is most suitable for the use in a multilayer ceramic capacitor.

The present invention will be described below in further detail referring to examples and comparative examples.

### [Example 1]

Three kinds of gases, which were a gas produced by subliming nickel chloride, hydrogen gas, and nitrogen gas, were mixed so that the mole ratio of the gas produced by subliming nickel chloride became 0.10, and nickel powder was manufactured by the vapor-phase reaction in a reaction column heated to 1000 to 1100°C. Image analysis was performed for 4000 particles of the obtained nickel powder using the SEM, and the flow rate of the mixed gas in the reaction column was adjusted so that the average particle diameter of primary particles became 0.2 µm.

As a result of image analysis for 4000 particles of the obtained nickel powder using the SEM, the average particle diameter of primary particles was 0.21 µm, and the number of primary particles that had particle diameters of 0.12 µm (0.6 times the average particle diameter) or less was 4% of the total number of observed particles. The number of primary particles that had particle diameters of 1 µm or larger observed for 512,000 particles in a lowered magnification of the SEM was 258 ppm of the total number of observed particles.

A water slurry was prepared from nickel powder obtained by vapor-phase reaction, the nickel powder was sufficiently dispersed in water using a dispersing machine equipped with an ultrasonic vibrator, and then the slurry was classified using an imperforate-wall basket-type centrifugal separator with a skimming pipe (internal capacity: 3 L, basket inner diameter: 300 mm, water slurry supply rate: 2.5 L/min, rotation speed: 1800 rpm), and water slurry discharged from the skimming pipe was collected. The water slurry contained nickel powder from which coarse particles had been removed. The collected slurry was pressure dehydrated and vacuum dried to recover the nickel powder.

As a result of image analysis for 4000 particles of the obtained nickel powder using the SEM, the average particle diameter of primary particles was 0.20 µm, and the number of primary particles that had particle diameters of 0.12 µm (0.6 times the average particle diameter) or less was 4% of the total number of observed particles. The number of primary particles that had particle diameters of 1 µm or larger counted for 512,000 particles in a lowered magnification of the SEM was 4 ppm of the total number of observed particles.

### [Example 2]

A water slurry was prepared from nickel powder obtained by vapor-phase reaction in Example 1, the nickel powder was sufficiently dispersed in water using a dispersing machine equipped with an ultrasonic vibrator, and then the slurry was classified using an imperforate-wall basket-type centrifugal separator with a skimming pipe (internal capacity: 3 L, basket inner diameter: 300 mm, water slurry supply rate: 2.5 L/min, rotation speed: 1400 rpm), and water slurry discharged from the skimming pipe, specifically, the water slurry contained nickel powder from which coarse particles had been removed, was collected. The collected slurry was pressure dehydrated and vacuum dried to recover the nickel powder.

As a result of image analysis for 4000 particles of the obtained nickel powder using the SEM, the average particle diameter of primary particles was 0.20 µm, and the number of primary particles that had particle diameters of 0.12 µm (0.6 times the average particle diameter) or less was 4% of the total number of observed particles. The number of primary particles that had particle diameters of 1 µm or larger counted for 512,000 particles in a lowered magnification of the SEM was 44 ppm of the total number of observed particles.

### [Example 3]

Three kinds of gases, which were a gas produced by subliming nickel chloride, hydrogen gas, and nitrogen gas, were mixed so that the mole ratio of the gas produced by subliming nickel chloride became 0.17, and nickel powder was manufactured by the vapor-phase reaction in a reaction column heated to 1000 to 1100°C. Image analysis was performed for 4000 particles of the obtained nickel powder using the SEM, and the flow rate of the mixed gas in the reaction column was adjusted so that the average particle diameter of primary particles became 0.3 µm.

As a result of image analysis for 4000 particles of the obtained nickel powder using the SEM, the average particle diameter of primary particles was 0.27 µm, and the number of primary particles that had particle diameters of 0.16 µm (0.6 times the average particle diameter) or less was 9% of the total number of observed particles. The number of primary particles that had particle diameters of 1 µm or larger observed for 512,000 particles in a lowered magnification of the SEM was 721 ppm of the total number of observed particles.

A water slurry was prepared from nickel powder obtained by vapor-phase reaction, the nickel powder was sufficiently dispersed in water using a dispersing machine equipped with an ultrasonic vibrator, and then the slurry was classified using an imperforate-wall basket-type centrifugal separator with a skimming pipe (internal capacity: 3 L, basket inner diameter: 300 mm, water slurry supply rate: 2.5 L/min, rotation speed: 1600 rpm), and water slurry discharged from the skimming pipe, specifically, the water slurry contained nickel powder from which coarse particles had been removed, was collected. The collected slurry was pressure dehydrated and vacuum dried to recover the nickel powder.

As a result of image analysis for 4000 particles of the obtained nickel powder using the SEM, the average particle diameter of primary particles was 0.26 µm, and the number of primary particles that had particle diameters of 0.16 µm (0.6 times the average particle diameter) or less was 9% of the total number of observed particles. The number of primary particles that had particle diameters of 1 µm or larger counted for 512,000 particles in a lowered magnification of the SEM was 37 ppm of the total number of observed particles.

### [Example 4]

Three kinds of gases, which were a gas produced by subliming nickel chloride, hydrogen gas, and nitrogen gas, were mixed so that the mole ratio of the gas produced by subliming nickel chloride became 6.10, a gas produced by subliming zirconium chloride was further added in a quantity of 0.5% by mass relative to the gas produced by subliming nickel chloride, and nickel-zirconium alloy powder was manufactured by the vapor-phase reaction in a reaction column heated to 1000 to 1100°C.

Image analysis was performed for 4000 particles of the obtained nickel-zirconium alloy powder using the SEM, and the flow rate of the mixed gas in the reaction column was adjusted so that the average particle diameter of primary particles became 0.2 µm. As a result of image analysis for 4000 particles of the obtained nickel-zirconium alloy powder using the SEM, the average particle diameter of primary particles was 0.20 µm, and the number of primary particles that had particle diameters of 0.12 µm (0.6 times the average particle diameter) was 5% of the total number of observed particles. The number of primary particles that had particle diameters of 1 µm or larger observed for 512,000 particles in a lowered magnification of the SEM was 392 ppm of the total number of observed particles.

A water slurry was prepared from nickel-zirconium alloy powder obtained by vapor-phase reaction, the nickel-zirconium alloy powder was sufficiently dispersed in water using a dispersing machine equipped with an ultrasonic vibrator, and then the slurry was classified using an imperforate-wall basket-type centrifugal separator with a skimming pipe (internal capacity: 3 L, basket inner diameter: 300 mm, water slurry supply rate: 2.5 L/min, rotation speed: 1500 rpm), and water slurry discharged from the skimming pipe, specifically, the water slurry contained nickel-zirconium alloy powder from which coarse particles had been removed, was collected. The collected slurry was pressure dehydrated and vacuum dried to recover the nickel-zirconium alloy powder.

As a result of image analysis for 4000 particles of the obtained nickel-zirconium alloy powder using the SEM, the average particle diameter of primary particles was 0.20 µm, and the number of primary particles that had particle diameters of 0.12 µm (0.6 times the average particle diameter) or less was 5% of the total number of observed particles. The number of primary particles that had particle diameters of 1 µm or larger counted for 512,000 particles in a lowered magnification of the SEM was 39 ppm of the total number of observed particles.

### [Example 5]

Three kinds of gases, which were a gas produced by subliming nickel chloride, hydrogen gas, and nitrogen gas, were mixed so that the mole ratio of the gas produced by subliming nickel chloride became 0.10, a gas produced by subliming tungsten chloride was further added in a quantity of 0.5% by mass relative to the gas produced by subliming nickel chloride, and nickel-tungsten alloy powder was manufactured by the vapor-phase reaction in a reaction column heated to 1000 to 1100°C.

Image analysis was performed for 4000 particles of the obtained nickel-tungsten alloy powder using the SEM, and the flow rate of the mixed gas in the reaction column was adjusted so that the average particle diameter of primary particles became 0.2 µm. As a result of image analysis for 4000 particles of the obtained nickel-tungsten alloy powder using the SEM, the average particle diameter of primary particles was 0.22 µm, and the number of primary particles that had particle diameters of 0.13 µm (0.6 times the average particle diameter) or less was 5% of the total number of observed particles. The number of primary particles that had particle diameters of 1 µm or larger observed for 512,000 particles in a lowered magnification of the SEM was 407 ppm of the total number of observed particles.

A water slurry was prepared from nickel-tungsten alloy powder obtained by vapor-phase reaction, the nickel-tungsten alloy powder was sufficiently dispersed in water using a dispersing machine equipped with an ultrasonic vibrator, and then the slurry was classified using an imperforate-wall basket-type centrifugal separator with a skimming pipe (internal capacity: 3 L, basket inner diameter: 300 mm, water slurry supply rate: 2.5 L/min, rotation speed: 1500 rpm), and water slurry discharged from the skimming pipe, specifically, the water slurry contained nickel-tungsten alloy powder from which coarse particles had been removed, was collected. The collected slurry was pressure dehydrated and vacuum dried to recover the nickel-tungsten alloy powder.

As a result of image analysis for 4000 particles of the obtained nickel-tungsten alloy powder using the SEM, the average particle diameter of primary particles was 0.21 µm, and the number of primary particles that had particle diameters of 0.13 µm (0.6 times the average particle diameter) or less was 5% of the total number of observed particles. The number of primary particles that had particle diameters of 1 µm or larger counted for 512,000 particles in a lowered magnification of the SEM was 46 ppm of the total number of observed particles.

### [Comparative Example 1]

A water slurry was prepared from nickel powder obtained by vapor-phase reaction in Example 1, the slurry was classified using an imperforate-wall basket-type centrifugal separator with a skimming pipe (internal capacity: 3 L, basket inner diameter: 300 mm, water slurry supply rate: 2.5 L/min, rotation speed: 1300 rpm), and water slurry discharged from the skimming pipe, specifically, the water slurry that contained nickel powder from which coarse particles had been removed was collected. The collected slurry was pressure dehydrated and vacuum dried to recover the nickel powder.

As a result of image analysis for 4000 particles of the obtained nickel powder using the SEM, the average particle diameter of primary particles was 0.20 µm, and the number of primary particles that had particle diameters of 0.12 µm (0.6 times the average particle diameter) or less was 4% of the total number of observed particles. The number of primary particles that had particle diameters of 1 µm or larger counted for 512,000 particles in a lowered magnification of the SEM was 54 ppm of the total number of observed particles.

### [Comparative Example 2]

A water slurry was prepared from nickel powder obtained by vapor-phase reaction in Example 1, the slurry was classified using an imperforate-wall basket-type centrifugal separator with a skimming pipe (internal capacity: 3 L, basket inner diameter: 300 mm, water slurry supply rate: 2.5 L/min, rotation speed: 1000 rpm), and water slurry discharged from the skimming pipe, specifically, the water slurry that contained nickel powder from which coarse particles had been removed was collected. The collected slurry was pressure dehydrated and vacuum dried to collect the nickel powder.

As a result of image analysis for 4000 particles of the obtained nickel powder using the SEM, the average particle diameter was 0.20 µm, and the number of primary particles that had particle diameters of 0.12 µm (0.6 times the average particle diameter) or less was 4% of the total number of observed particles. The number of primary particles that had particle diameters of 1 µm or larger counted for 512,000 particles in a lowered magnification of the SEM was 173 ppm of the total number of observed particles.

### [Comparative Example 3]

Three kinds of gases, which were a gas produced by subliming nickel chloride, hydrogen gas, and nitrogen gas, were mixed so that the mole ratio of the gas produced by subliming nickel chloride became 0.18, and nickel powder was manufactured by the vapor-phase reaction in a reaction column heated to 1000 to 1100°C.

Image analysis was performed for 4000 particles of the obtained nickel powder using the SEM, and the flow rate of the mixed gas in the reaction column was adjusted so that the average particle diameter of primary particles became 0.32 µm. As a result of image analysis for 4000 particles of the obtained nickel powder using the SEM, the average particle diameter of primary particles was 0.34 µm, and the number of primary particles that had particle diameters of 0.20 µm (0.6 times the average particle diameter) or less was 10% of the total number of observed particles. The number of primary particles that had particle diameters of 1 µm or larger counted for 512,000 particles in a lowered magnification of the SEM was 1926 ppm of the total number of observed particles.

A water slurry was prepared from nickel powder obtained by vapor-phase reaction, the nickel powder was sufficiently dispersed in water using a dispersing machine equipped with an ultrasonic vibrator, and then the slurry was classified using an imperforate-wall basket-type centrifugal separator with a skimming pipe (internal capacity: 3 L, basket inner diameter: 300 mm, water slurry supply rate: 2.5 L/min, rotation speed: 1600 rpm), and water slurry discharged from the skimming pipe, specifically, the water slurry that contained nickel powder from which coarse particles had been removed was collected. The collected slurry was pressure dehydrated and vacuum dried to recover the nickel powder.

As a result of image analysis for 4000 particles of the obtained nickel powder using the SEM, the average particle diameter of primary particles was 0.32 µm, and the number of primary particles that had particle diameters of 0.19 µm (0.6 times the average particle diameter) or less was 10% of the total number of observed particles. The number of primary particles that had particle diameters of 1 µm or larger counted for 512,000 particles in a lowered magnification of the SEM was 92 ppm of the total number of observed particles.

### [Comparative Example 4]

Three kinds of gases, which were a gas produced by subliming nickel chloride, hydrogen gas, and nitrogen gas, were mixed so that the mole ratio of the gas produced by subliming nickel chloride became 0.08, and nickel powder was manufactured by the vapor-phase reaction in a reaction column heated to 1000 to 1100°C. Image analysis was performed for 4000 particles of the obtained nickel powder using the SEM, and the flow rate of the mixed gas in the reaction column was adjusted so that the average particle diameter of primary particles became 0.10 µm.

As a result of image analysis for 4000 particles of the obtained nickel powder using the SEM, the average particle diameter of primary particles was 0.11 µm. As a result of image analysis for 4000 particles of the nickel powder obtained by mixing the above nickel powder with the nickel powder obtained by the vapor-phase reaction in Example 1 using the SEM, the average particle diameter of primary particles was 0.20 µm and the number of primary particles that had particle diameters of 0.12 µm (0.6 times the average particle diameter) or less was 19% of the total number of observed particles. The number of primary particles that had particle diameters of 1 µm or larger observed for 512,000 particles in a lowered magnification of the SEM was 219 ppm of the total number of observed particles.

A water slurry was prepared from this nickel powder, the nickel powder was sufficiently dispersed in water using a dispersing machine equipped with an ultrasonic vibrator, and then the slurry was classified using an imperforate-wall basket-type centrifugal separator with a skimming pipe (internal capacity: 3 L, basket inner diameter: 300 mm, water slurry supply rate: 2.5 L/min, rotation speed: 1800 rpm), and water slurry discharged from the skimming pipe, specifically, the water slurry that contained nickel powder from which coarse particles had been removed was collected. The collected slurry was pressure dehydrated and vacuum dried to recover the nickel powder.

As a result of image analysis for 4000 particles of the obtained nickel powder using the SEM, the average particle diameter of primary particles was 0.20 µm, and the number of primary particles that had particle diameters of 0.12 µm (0.6 times the average particle diameter) or less was 19% of the total number of observed particles. The number of primary particles that had particle diameters of 1 µm or larger counted for 512,000 particles in a lowered magnification of the SEM was 3 ppm of the total number of observed particles.

A paste for an internal electrode was prepared using nickel-based ultra-fine powders of Examples 1 to 5 and Comparative Examples 1 to 4, and multilayer ceramic capacitors were fabricated to compare failure rates due to short-circuiting and cracking. After printing the paste of nickel powder or nickel alloy powder on green sheets that had a dielectric material of a thickness of about 1.2 µm so that the thickness became about 1.2 µm, 100 layers were stuck, pressure bonded, cut and processed by a binder-removing process and a firing process. As the results shown in Table 1, a multilayer ceramic capacitor using nickel powder or nickel alloy powder according to the examples of the present invention has a significantly low short-circuiting rate of internal electrodes and occurrence rate of internal cracking compared with comparative examples.

**[Table 1]**

| | Average particle diameter (µm) | Number ratio of particles of average particle diameter × 0.6 or less (%) | Number ratio of particles of 1 µm or larger (ppm) | Percentage short-circuiting of internal electrode (%) | Percentage occurrence of internal cracks (%) |
|---|---|---|---|---|---|
| Example 1 | 0.20 | 4 | 4 7 0 | | |
| Example 2 | 0.20 | 4 | 44 | 9 | 0 |
| Example 3 | 0.26 | 9 | 37 | 8 | 0 |
| Example 4 | 0.20 | 5 | 39 | 8 | 0 |
| Example 5 | 0.21 | 5 | 46 | 10 | 0 |
| Comparative Example 1 | 0.20 | 4 | 54 | 15 | 0 |
| Comparative Example 2 | 0.20 | 4 | 173 | 95 | 0 |
| Comparative Example 3 | 0.32 | 10 | 92 | 28 | 0 |
| Comparative Example 4 | 0.20 | 19 | 3 | 6 | 51 |

## Claims

1. A nickel-based ultra-fine powder, wherein the average particle diameter of primary particles is 0.05 to 0.3 µm, the number of the primary particles that have a particle diameter of 1 µm or larger is 50 ppm or less relative to the total number of the particles, and the number of the primary particles that have a particle diameter of 0.6 times or smaller than the average particle diameter is 10% or less relative to the total number of the particles.

2. The nickel-based ultra-fine powder according to claim 1, wherein the nickel-based ultra-fine powder is produced from nickel chloride vapor using a vapor-phase hydrogen reduction method.

3. The nickel-based ultra-fine powder according to claim 1 or 2, wherein the nickel-based ultra-fine powder is used for a multilayer ceramic capacitor.
